# FASCICULE DE BREVET EUROPEEN

(11) **EP 2 924 854 B1**
(45) Date de publication et mention de la délivrance du brevet: **13.02.2019**
(21) Numéro de dépôt: 15155962.2
(22) Date de dépôt: 20.02.2015
(51) Int. Cl.: H02K 11/00, H02K 3/52

(54) **Capteur de température pour stator de machine électrique et machine électrique comportant un tel capteur**
Temperaturgeber für elektrische Maschine und elektrische Maschine aufweisend ein Temperaturgeber
Temperature sensor for stator of electric machine and electric machine containing such sensor

(30) Priorité: 25.03.2014 FR 1452531
(43) Date de publication de la demande: 30.09.2015
(73) Titulaire: VALEO EQUIPEMENTS ELECTRIQUES MOTEUR, 94046 Créteil Cedex (FR)
(72) Inventeur: El Baraka, Khadija, 77700 SERRIS (FR); Jugovic, Svetislav, 91200 ATHIS-MONS (FR)
(74) Mandataire: Duprez, Richard

(56) Documents cités:
- FR-A1- 2 995 741
- US-A1- 2011 080 072

## Description

### Domaine de l'invention

La présente invention concerne un capteur de température pour stator de machine électrique tournante et une machine électrique tournante comportant un tel capteur.

L'invention se rapporte au domaine des machines électriques telles que les moteurs, les alternateurs, ou les alterno-démarreurs.

Plus précisément, l'invention concerne des machines tournantes de type alternateur ou alterno-démarreur, mises en oeuvre dans les véhicules automobiles.

Et plus précisément encore, l'invention concerne les machines tournantes dont le rotor comprend des aimants, par exemple des aimants permanents comme des aimants en terres rares et/ou en ferrite.

### Etat de la technique

Dans le domaine, on connait déjà un support pour capteur de température du stator d'une machine électrique tournante et un procédé de montage d'un capteur de température dans un stator d'une machine électrique tournante.

Le procédé consiste à :a) enrouler sur un corps une pluralité de spires en sorte que des spires adjactentes soient séparées par de petits interstices, b) augmenter l'interstice entre au moins une paire de spires adjacentes sans déformer plastiquement les spires, c) insérer un capteur de température ayant une dimension légèrement supérieure audit interstice avant la réalisation de l'étape b) dans l'interstice entre la paire de spires, et, d) laisser les spires revenir élastiquement à leur position d'origine.

Un tel support et un tel procédé sont divulgués dans EP 0 681 756 (et son équivalent américain US5343613).

Le support, formé par les spires, comprend :
- un corps élastique comportant un capteur de température à l'endroit d'une portion faisant saillie suivant un axe vertical, ledit corps comprenant, suivant ledit axe vertical, une première position dans laquelle le corps est détendu et une seconde position dans laquelle le corps est compressé,
- au moins un élément de fixation présentant une paroi de contact.

Il a été constaté que l'utilisation d'un tel support pour capteur de température et la mise en oeuvre d'un tel procédé de montage d'un capteur de température affectaient les coûts de fabrication.

En particulier, la mise en oeuvre du procédé nécessite de :
- prévoir des petits interstices lors de l'étape a) ;
- augmenter ces interstices entre les paires de spires sans déformer plastiquement les spires ;
- tenir compte de la taille du capteur par rapport aux dimensions de l'interstice avant l'augmentation de leurs dimensions durant l'étape b).

Toutes ces étapes rendent compliquées l'implantation d'un capteur de température dans un stator puisqu'elles rajoutent des contraintes dans le cahier des charges de l'unité de montage du stator d'une machine électrique tournante. Ces contraintes nécessitent une intervention humaine et/ou d'une machine, à plusieurs reprises, lors du procédé de montage du capteur de température dans le stator, ce qui multiplie les risques de déteriorer les spires et augmente le temps de montage du capteur de température.

Par ailleurs, compte tenu de la nature du support, i.e. formé par les spires, il est rendu possible que le capteur se dégage de son support de manière intempestive.

Le document US 2011/080072 divulgue un stator et un procédé de montage d'un capteur de temperature dans ledit stator.

### Objet de l'invention

Dans ce contexte, le problème ici posé est de faciliter l'implantation du capteur de température. En particulier, il s'agit de proposer un stator comprenant un support, facile à réaliser et peu coûteux, pour porter un capteur de température. Il s'agit aussi de faciliter la mise en oeuvre du procédé de montage du capteur de température dans un stator d'une machine électrique tournante, en minimisant les étapes rendant compliquées l'implantation d'un capteur de température dans un stator. Un autre objectif ici visé est donc de réduire les contraintes de montage et de diminuer le temps consacré à l'implantation de ce seul capteur.

L'invention a pour objet un stator d'une machine électrique tournante comprenant :
- un interconnecteur pour interconnecter des bobines ;
- un bobinage enroulé autour d'un corps de stator ;
un support comprenant un corps élastique qui comporte un capteur de température orienté vers le bobinage, ledit corps élastique étant configuré pour avoir suivant un axe vertical A une première position dans laquelle le corps est détendu et une seconde position dans laquelle le corps est compressé, le support comprenant au moins un élément de fixation présentant une paroi de contact qui est adaptée à être maintenue fixement et en contact sur l'interconnecteur .

Selon une caractéristique générale, le support est porté par l'interconnecteur et suivant l'axe vertical A, dans ladite seconde position, le capteur est à plus grande proximité de ladite paroi que dans ladite première position.

La capacité de déformation élastique du corps du support pour capteur permet favorablement au support de se conformer à l'encombrement disponible entre l'interconnecteur et le stator. Par exemple, cette capacité de déformation élastique du corps peut permettre d'assurer le contact entre le capteur de température, d'une part, et le bobinage d'autre part. Aucun jeu entre le capteur de température et le bobinage n'est possible puisque c'est le corps du support qui le rattrape élastiquement.

Selon une caractéristique, le corps élastique comporte ledit capteur de température à l'endroit d'une portion faisant saillie suivant un axe vertical A.

Avantageusement, le support, de nature très compacte, présente au moins un élément de fixation rendant possible son assemblage sur l'interconnecteur pour interconnecter les bobines. L'ensemble constitué par le support pour capteur et l'interconnecteur peut alors être positionné puis fixé sur le stator, l'interconnecteur étant alors soudé aux bobines.

La capacité de déformation élastique du corps et notamment l'au moins une paroi (dudit au moins un élément de fixation) adaptée à être maintenu fixement et en contact sur un interconnecteur pour interconnecter des bobines, permet de monter le support sur l'interconnecteur et de disposer cet ensemble en évitant des pertes de contact intempestives entre le capteur de température et le bobinage ceci afin d'assurer un contact continu dans le temps.

Suivant un mode de réalisation de l'invention, le capteur est situé sur une portion centrale du corps définissant la portion faisant saillie et l'au moins un élément de fixation est porté par une portion terminale du corps située à distance de ladite portion centrale.

Cette conformation permet d'améliorer la capacité du support à occuper une première fonction pour intégrer le capteur facilement au moment du montage et une deuxième fonction pour rattraper le jeu entre le capteur de température et le bobinage. Agencer le capteur sur la portion centrale du corps permet d'assurer le contact continu avec la bobine et agencer l'au moins un élément de fixation sur une portion terminale du corps permet un débattement élastique suivant l'axe vertical susmentioné.

Dans un autre mode de réalisation, le capteur est situé sur une face inférieure du corps élastique, ladite face étant orientée dans une orientation opposée à celle de la paroi de contact.

Cet agencement permet de faciliter l'implantation du capteur de température puisque la paroi de contact de l'au moins un élément de fixation, en contact avec l'interconnecteur, est alors à distance du capteur et suivant une orientation opposée. Le paramètre permettant de contrôler le débattement vertical du capteur et ainsi assurer un contact continu du capteur avec le bobinage est donc la distance entre la face inférieure du corps élastique et la paroi de contact avec l'interconnecteur.

Dans un autre mode de réalisation, le corps présente des fentes transversales, préférentiellement à plus grande proximité des portions terminales que de la portion centrale.

Avatangeusement, ces fentes permettent de faciliter la déformation élastique du corps selon sa plus grande longueur et ainsi la déformation selon l'axe vertical, comme il s'agit d'un corps élastique du type ressort à lames.

Dans un autre mode de réalisation, les portions terminales présentent des évidements latéraux à l'endroit de leurs bords transversaux.

Ces évidements latéraux ont notamment pour fonction de faciliter la fixation dudit support sur l'interconnecteur.

Dans un mode de réalisation, le capteur est en contact avec une partie supérieure du bobinage.

Le contact du capteur avec la partie supérieure du bobinage permet d'une part de minimiser les pièces nécessaires au positionnement du capteur par rapport au bobinage, et elle permet d'autre part d'avoir des informations fiables sur la température du bobinage puisque le capteur est directement en contact du bobinage.

Dans un mode de réalisation, le support est maintenu sur l'interconnecteur à l'endroit d'une face inférieure dudit interconnecteur.

Dans un mode de réalisation, le support est maintenu sur l'interconnecteur au moyen d'un système d'encliquetage.

Un système d'encliquetage permet de monter facilement, rapidement et de manière économique le support sur l'interconnecteur.

Dans un mode de réalisation, le système d'encliquetage est constitué de :
- deux éléments de maintien définissant des pattes et portés par l'interconnecteur ;
- deux évidements portés par le support et adaptés à coopérer avec les deux éléments de maintien.

Le système d'encliquetage tire avantageusement partie des propriétés de déformation élastique du corps élastique. Plus précisément, le corps élastique peut se déformer de telle sorte que les évidements soient mis en regard des deux éléments de maintien portés par l'interconnecteur. Cela a donc pour effet de faciliter le montage du support au sein du stator.

Suivant un autre objet de l'invention, est également visé un procédé de montage d'un capteur de température dans un stator d'une machine électrique tournante comportant les étapes successives suivantes :
a) un support portant un capteur de température est monté sur un interconnecteur,
b) l'interconnecteur est fixé sur un stator et positionné au-dessus d'un bobinage enroulé autour d'un corps et porté par le stator, le capteur étant concomitamment mis en contact du bobinage.

Avantageusement, ce procédé de montage diminue le temps de montage d'un capteur de température en montant préalablement le support sur l'interconnecteur et en fixant ensuite l'interconnecteur sur le stator, l'opération consistant à fixer l'interconnecteur au stator étant déjà connue dans l'état de l'art. Comme le capteur est concomitamment mis en contact avec le bobinage, aucune autre étape n'est nécessaire.

Dans un mode de réalisation de l'invention, le capteur est mis en contact avec une partie supérieure du bobinage.

Dans un autre mode de réalisation, il existe une étape c) d'imprégnation alors que le capteur est en contact avec le bobinage.

Le capteur étant en contact avec le bobinage au moment de l'opération d'imprégnation, il en résulte que le contact entre le capteur et le bobinage est plus intime que dans le cas où l'opération d'imprégnation avait lieu avant que le capteur ne soit en contact avec le bobinage. Cette intimité du contact entre le capteur et le bobinage améliore la fidélité de la mesure de la température du bobinage.

### Description des dessins

L'invention sera mieux comprise à la lecture de la description qui suit et à l'examen des figures qui l'accompagnent. Ces figures ne sont données qu'à titre illustratif mais nullement limitatif de l'invention.
La figure 1a et 1b montrent respectivement des vues en perspective d'un stator seul et d'un stator bobiné muni d'un interconnecteur.
La figure 1c montre une vue due détaillée des connexions entre une bobine du stator et d'un premier exemple d'interconnecteur.
Les figures 2a à 2c montrent respectiviement des vues en perspective de dessus et de dessous d'un premier exemple d'interconnecteur.
La figure 3 représente, suivant une vue en perspective, un cadre de phase d'un interconnecteur.
La figure 4 montre une vue en perspective d'un empilement des cadres formant un deuxième exemple d'interconnecteur.
La figure 5 montre une vue en coupe transversale de l'empilement des cadres d'un exemple d'interconnecteur montré sur la figure 4.
La figure 6 montre, suivant une vue en perspective, le détail d'un exemple de liaison entre un pion d'indexage et un interconnecteur avec un système de guidage d'isolant de bobine.
La figure 7 montre, suivant une vue en perspective, un isolant de bobine destiné à être monté sur une dent du stator.
La figure 8 montre une vue en perspective d'un exemple de réalisation d'un support pour capteur de température.
La figure 9 montre une vue en perspective d'un autre exemple de réalisation d'un interconnecteur lorsqu'il ne porte pas le support pour capteur de température.
Les figures 10a et 10b montrent des vues en perspectives de dessus d'un interconnecteur et d'un support pour capteur de température ; la figure 10a montre le sens de montage du support pour capteur de température dans l'interconnecteur ; la figure 10b montre l'interconnecteur équipé du support pour capteur de température.
Les figures 11a et 11b montrent des vues en perspective de dessus d'un stator et d'un interconnecteur équipé du capteur; la figure 11a montre l'interconnecteur alors qu'il n'est pas encore monté sur le stator ; la figure 11b montre l'interconnecteur une fois monté sur le stator.
La figure 12 est une vue de coupe mettant en évidence le contact entre la bobine et le capteur monté sur l'interconnecteur.

### Descriptions d'exemples de réalisation

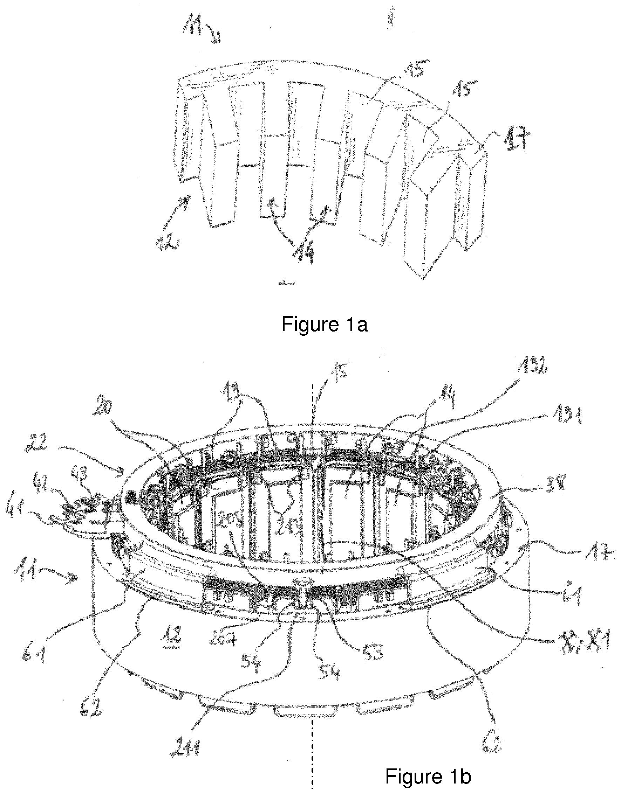

Les figures 1a et 1b montrent un stator 11 d'axe X ayant un corps 12 comportant des dents 14 réparties régulièrement sur la périphérie interne ainsi que des encoches 15 ouvertes vers l'intérieur, deux encoches 15 consécutives étant séparées par une dent 14. Ces dents 14 sont à bords parallèles deux à deux, une bande de matière, correspondant à la culasse 17 existant entre le fond des encoches 15 et la périphérie externe du corps 12. Le corps 12 est formé par un empilement de tôles réalisées en matière ferromagnétique s'étendant dans un plan radial perpendiculaire à l'axe X. Le paquet de tôles est maintenu au moyen de rivets (non représentés) traversant axialement de part en part l'empilement des tôles.

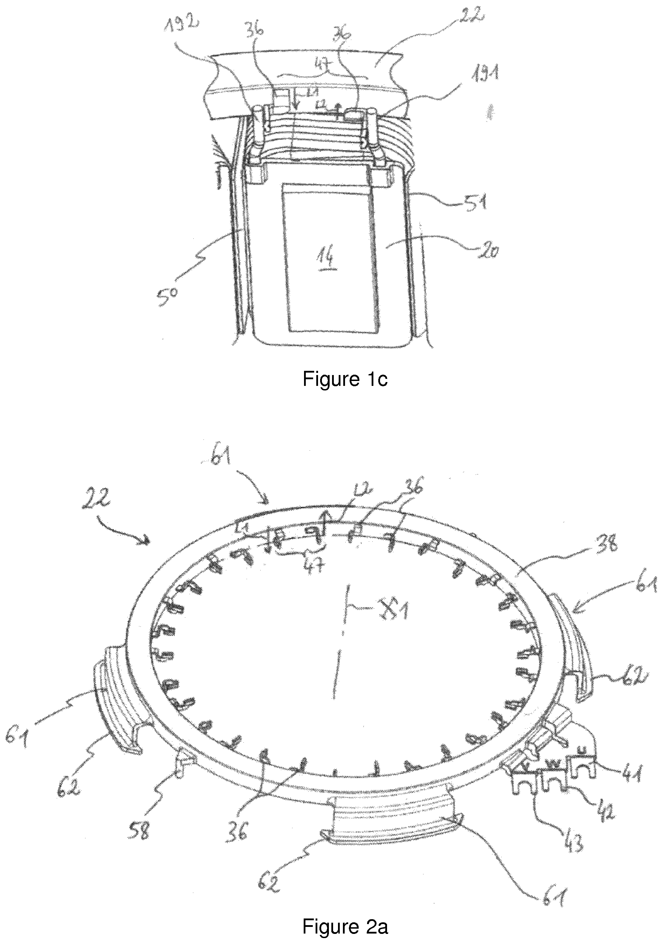

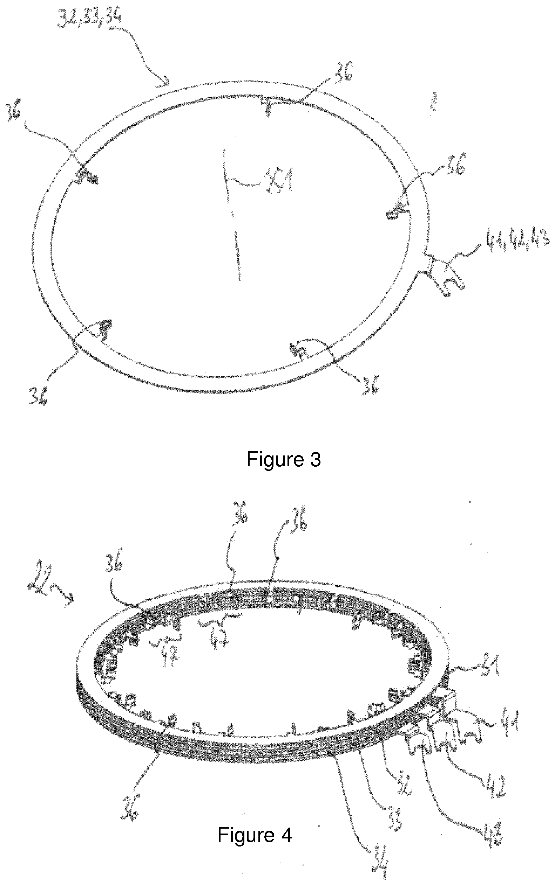

Le stator 11 appartient à une machine électrique tournante polyphasée comportant dans ce mode de réalisation un bobinage de stator doté de plusieurs bobines 19, ici préformées, et d'un point neutre, dit neutre de la machine, visible par exemple à la figure 1 du document EP 0 831 580. Les bobines 19 sont interconnectées entre elles à l'aide d'un interconnecteur 22 compact comportant plusieurs cadres 31-34 (voir figure 4) dont l'un 31, dit cadre de neutre 31 est relié au neutre de la machine électrique tournante.

Plus précisément comme cela est visible sur la figure 1b, on monte sur les dents 14 du stator les bobines 19 préformées formant le bobinage du stator 11. Ces bobines 19 sont réalisées à partir d'un fil (ou plusieurs) enroulé sur plusieurs tours. Les fils consistent en un fil électriquement conducteur, par exemple en un fil de cuivre et/ou d'aluminium, revêtu d'un isolant électrique, tel que de l'émail. Les fils peuvent être de section circulaire, rectangulaire ou en forme de méplat.

Dans une forme de réalisation, deux bobines 19 sont implantées dans une même encoche 15, chaque bobine 19 étant enroulée autour de l'une des dents 14 métalliques délimitant l'encoche 15 par l'intermédiaire d'un isolant de bobine 20, chaque dent ayant une bobine. Cet isolant 20 est un isolant électrique réalisé dans ce mode de réalisation en matière électriquement isolante et moulable. Les extrémités 191, 192 de chaque bobine 19 dépassent axialement du bobinage d'un même côté du stator 11 correspondant sur la figure 1b au côté supérieur du stator 11 ; le côté supérieur du stator est le côté orienté vers l'interconnecteur 22. De préférence, les extrémités 191, 192 des bobines 19 sont situées sensiblement suivant une même circonférence du côté de l'extrémité libre des dents 14, c'est-à-dire du côté éloigné de la culasse 17 et du côté le plus proche de l'entrefer entre la périphérie interne du stator et la périphérie externe du rotor que comporte la machine électrique. Chaque bobine 19 comporte une première extrémité 191 appelée "entrée" destinée à être connectée avec les autres entrées 5 d'une phase donnée de manière alternée pour appartenir à une des phases U, V, W de la machine et une deuxième extrémité 192 appelée "sortie" destinée à être reliée au neutre de la machine électrique. A cet effet, les bobines 19 sont interconnectées entre elles pour former les différentes phases U, V, W à l'aide de l'interconnecteur 22 d'axe X1 confondu.

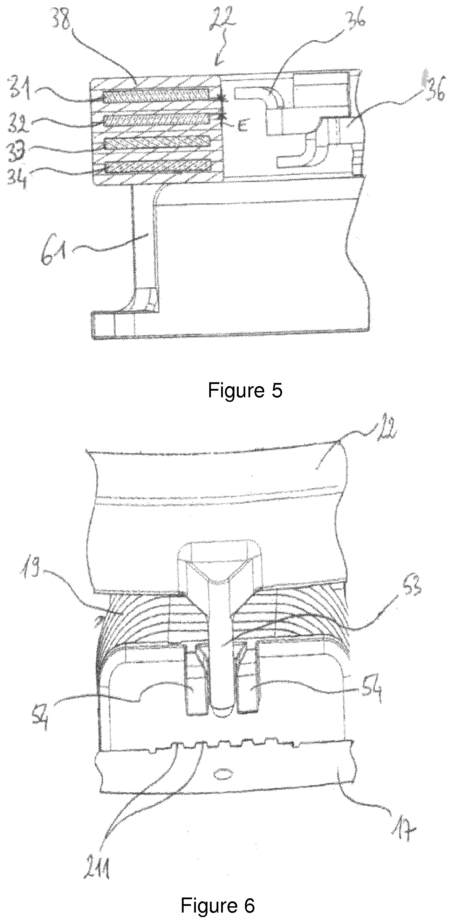

Plus précisément, comme cela est visible sur les figures 4 et 5, l'interconnecteur 22 comporte quatre cadres 31-34 de forme annulaire s'étendant suivant un plan radial. Les cadres 31-34 sont électriquement conducteurs en étant par exemple en cuivre ou avantageusement en un autre matériau métallique soudable. Ces cadres 31-34 ont des diamètres internes et externes sensiblement identiques. Le diamètre externe des cadres 31-34, correspondant sensiblement au diamètre externe de l'interconnecteur 22, est inférieur au diamètre externe du stator 11, constitué par le diamètre externe de la culasse 17, pour réduire l'encombrement diamétral. Cela peut également faciliter une opération 20 d'imprégnation des bobines 19 . Ces cadres 31-34 sont empilés axialement les uns sur les autres et isolés électriquement entre eux. Chaque cadre 31-34 porte sur sa périphérie interne des pattes 36 apparentes s'étendant en saillie radiale vers l'intérieur du cadre pour le soudage des extrémités 191 ou 192 des bobines du stator ; chaque cadre correspond à une phase. De préférence, les cadres 31-34 sont noyés dans un corps 38 réalisé en matériau électriquement isolant, tel que de la matière plastique. Une couche de matière électriquement isolante 38 est présente entre chaque cadre comme visible par exemple à la figure 5.

Un des cadres 31, dit cadre neutre, est destiné à être relié au neutre du bobinage de la machine électrique comprenant les bobines 19 agencées dans ce cas selon un montage en étoile avec un point neutre constitué à la faveur du cadre 31. Ce cadre de neutre 31 est situé à une extrémité de l'empilement des cadres 31-34, ici à l'extrémité la plus éloignée de la culasse 17. Etant donné que chaque bobine 19 a une extrémité de sortie 192 reliée au neutre, le cadre 31 de neutre comporte un nombre de pattes 36 égal au nombre de bobines 19, par exemple égal à 15.

Les trois autre cadres 32-34, dit cadres de phase, sont destinés à être reliés chacun aux entrées 191 des bobines 19 de chaque phase U, V, W concernée de la machine électrique

Comme montré sur les figures 1b, 2a, 2b et 2c, 3 et 4, chaque cadre 32-34 de phase comporte sur sa périphérie externe un terminal 41-43 de connexion pour l'interconnexion avec un connecteur de puissance (non représenté) lui-même relié à un onduleur décrit par exemple dans le document EP 0 831 580. Ces terminaux 41-43 de connexion placés côte à côte présentent une extrémité en forme de U et constituent les sorties 20 des phases du bobinage à bobines 19 de la machine. On appréciera que les terminaux 41-43 sont simplifiés par rapport aux terminaux décrits dans le document US 2005/0253466 du fait qu'ils font partie des cadres 32-34. Ces terminaux 41-43 sont rigides et d'un encombrement réduit.

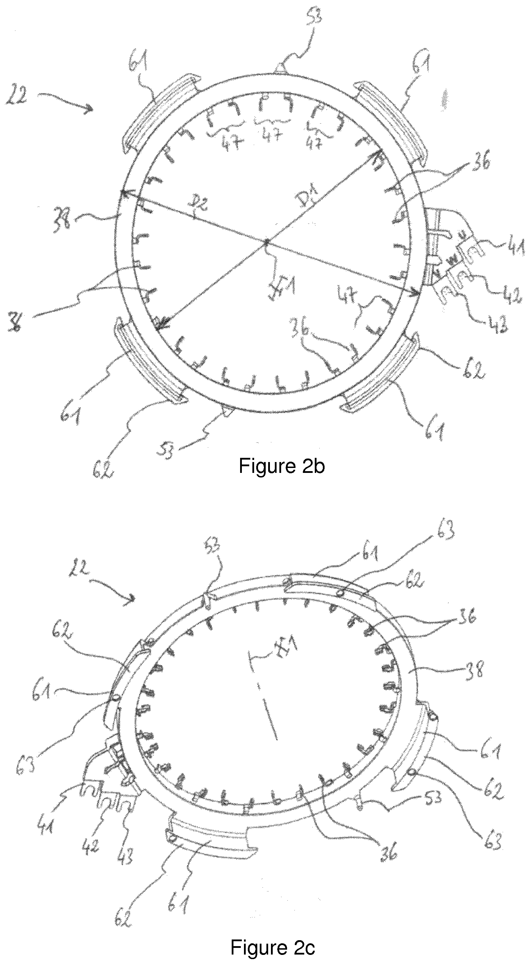

Les pattes 36 des différents cadres 31-34 sont décalées angulairement les unes par rapport aux autres. En outre, pour avoir suffisamment de place pour pincer une patte 36 et une extrémité 191 ou 192 d'une bobine 19 à l'aide d'une électrode de soudage, un ensemble 47, formé par une patte 36 d'un des cadres de phase 32-34 et une patte 36 du cadre de neutre 31 destinées à être soudées respectivement sur les extrémités 191, 192 d'une même bobine 19, est configuré de manière à être positionné entre les côtés 50, 51 de ladite bobine 19 s'étendant entre les extrémités axiales de la bobine 19 (cf. figures 1c et 2b). Plus précisément les pattes 36 de l'ensemble 47 sont en contact avec les zones en vis-à-vis des extrémités 191, 192 comme mieux visible à la figure 2c. On notera que les extrémités 191, 192 sont décalées l'une vers l'autre.

Par ailleurs, comme cela est visible sur les figures 1c et 2a, le cadre de neutre 31 étant situé à une extrémité de l'empilement des cadres 31-34, les pattes 36 du cadre de neutre 31 sont dirigées, suivant une direction axiale, dans un sens inverse par rapport aux pattes 36 des cadres de phase 32-34, de sorte que toutes les pattes 36 de l'interconnecteur 22 se situe à la même hauteur que les extrémités 191, 192 de bobine. En effet, les pattes 36 du cadre de neutre 31 sont dirigées suivant la direction axiale référencée L1 ; tandis que les pattes 36 des cadres de phase sont dirigées suivant la direction axiale opposée référencée L2. Une telle configuration qui limite la distance entre les pattes 36 de l'interconnecteur 22 et les extrémités des bobines 19 permet de réduire la longueur des fils du bobinage.

Par ailleurs, comme montré sur les figures 1b, 2a, 2b, 2c et 6, l'interconnecteur 22 comporte des pions 53 permettant, lors du montage, l'indexage de l'interconnecteur 22 par rapport aux bobines 19 afin de réduire les risques de mauvaises connexions entre les bobines. Ces pions d'indexage 53 d'extension axiale sont portés par une périphérie externe de l'interconnecteur 22. Suivant une réalisation, ces pions 53 comportent une base venant de matière avec la périphérie externe de l'interconnecteur 22 portant une tige de forme sensiblement cylindre ayant une extrémité libre biseautée. Ces pions d'indexage 53 sont destinés à coopérer avec des systèmes de guidage portés par les isolants de bobine 20. Comme cela est visible sur les figures 1b et 6, ces systèmes de guidage sont formés par des protubérances 54 définissant un passage pour un pion d'indexage 53. Pour faciliter l'insertion des pions 53 d'indexage entre les protubérances 54, les protubérances 54 sont conformées d'une manière telle que le passage présente une forme légèrement évasée à son extrémité débouchant du côté des extrémités 191, 192 du fil de la bobine 19. En l'occurrence, l'interconnecteur 22 comporte deux pions d'indexage 53.

Comme cela est visible sur les figures 1b, 2a, 2b, et 2c et 5, l'interconnecteur 22 comporte également des pieds d'appui 61 destinés à reposer sur un rebord de la culasse 17 du stator 11. Ces pieds d'appui 61 présentent une forme en L avec une extrémité fixée à la périphérie externe du corps 38 et une extrémité terminée par un support 62 en appui sur le rebord de la culasse 17. Le support 62 comporte des creux 63 visibles sur la figure 2c destinés à recevoir des extrémités des tirants de fixation du stator.

Les pieds d'appui 61 sont ici au nombre de quatre répartis de manière régulière autour du corps 38. Deux pieds d'appui 61 successifs sont ainsi écartés angulairement d'un angle de 90 degrés. Les pieds d'appui 61 permettent de maintenir le corps 38 du connecteur 22 au-dessus des bobines 19 sans que le corps 38 soit en contact avec les bobines 19. En outre, l'encombrement circonférentiel des pieds 61 est suffisamment faible pour éviter que l'interconnecteur 22 recouvre entièrement la périphérie externe des bobines 19, ce qui facilite le refroidissement du stator 11 du fait de la grande zone de dégagement entre deux pieds d'appui 61 successifs et de l'espace entre le corps 38 de l'interconnecteur 22 et les bobines 19.

Les formes des pions d'indexage 53 et des pieds d'appui 61 pourront être obtenues par moulage.

Dans un exemple non limitatif de réalisation, l'interconnecteur 22 comporte des cadres 31-34 réalisés en cuivre ayant des diamètres internes D1 de l'ordre de 198,5 mm et des diamètres externes D2 de l'ordre de 218,5 mm (cf. figure 3b). Ces cadres 31-34 sont séparés entre eux par une épaisseur E de matériau isolant de l'ordre de 1,6mm (cf. figure 6).

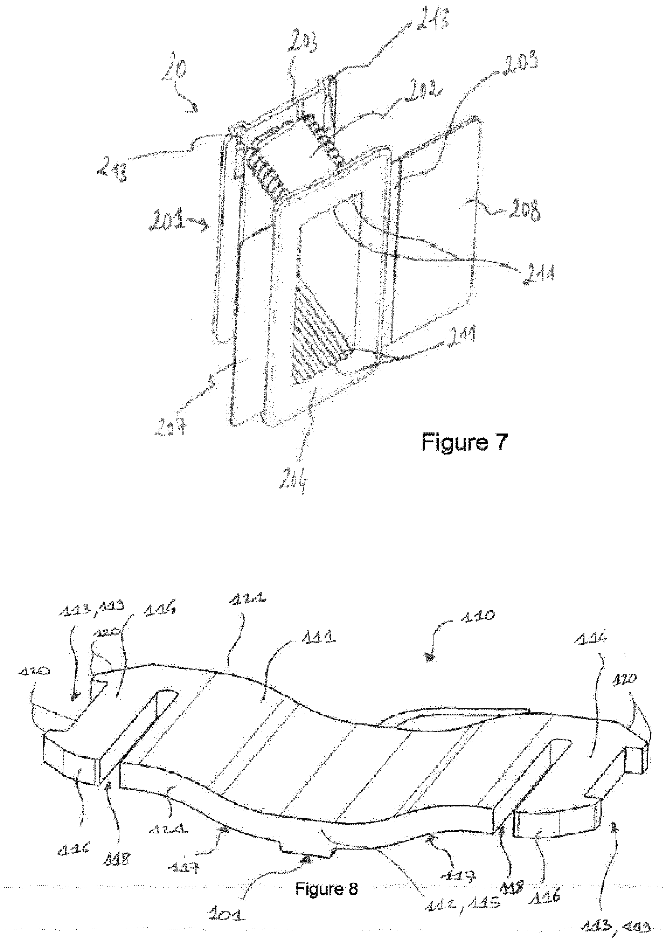

Par ailleurs, l'isolant 20 de bobine est réalisé en matière électriquement isolante par exemple en matière plastique telle que du PA 6.6, qui pourra être renforcé par des fibres, telles que des fibres de verre. Comme montré sur la figure 7, l'isolant de bobine 20 comporte un corps 201 formé par un cadre 202 ainsi qu'un rebord avant 203 et un rebord arrière 204 définissant avec les parois du cadre 202 une gorge de montage de la bobine 19, comme visible sur la figure 1b. Le rebord arrière 204, destiné à être positionné du côté de la culasse 17, est prolongé d'un côté par un talon 207; et de l'autre par une ailette 208 via une zone de pliage 209. Le talon 207 est moins épais et moins large que l'ailette 208. Le talon 207 permet d'isoler le fond de l'encoche 15.

Dans une variante, l'isolant 20 de bobine comporte en outre des rainures 211 borgnes ménagées dans les faces internes des parois supérieure et inférieure du cadre 202. Le coté non débouchant des rainures 211 borgnes est situé du côté intérieur de la machine afin d'éviter que le vernis d'imprégnation ne coule à l'intérieur de la machine et ce au niveau de l'entrefer délimité par les extrémités libre des dents 14 et la périphérie externe du rotor de la machine.

De préférence, comme cela est représenté sur les figures 1b et 7, les bordures longitudinales du rebord avant 203 sont configurées à une de leurs extrémités 213 pour servir de guide fil pour chaque extrémité 191, 192 de la bobine 19. A cet effet, les bordures longitudinales du rebord 203 présentent à une extrémité la forme d'une cuvette recevant une extrémité du fil. Le fil de la bobine 19 pourra être maintenu en position pour le soudage du connecteur 22 en prenant appui sur les faces latérales de la cuvette.

Chaque rebord 203, 204 présente deux bordures longitudinales et deux bordures transversales reliant entre elles les bordures longitudinales de plus grande longueur. Le talon 207 et l'ailette 208 sont issus des bordures longitudinales du rebord arrière (Voir figure 7). Ainsi dans d'autres modes de réalisation l'ailette 208 pourra être fixée au moyen d'un système d'encliquetage avec la bordure longitudinale du rebord avant 203 située du côté de l'ailette 208. Le système d'encliquetage pourra être formé par des pattes portées par la bordure longitudinale du rebord avant 203. Ces pattes sont destinées à coopérer par encliquetage avec des fenêtres ménagées dans la paroi de l'ailette 208 et pourront présenter chacune la forme d'un crochet ayant un côté en forme de rampe triangulaire terminée par un rebord permettant de retenir l'ailette 208 après que la patte a traversé une fenêtre. La zone de pliage, le bord de l'ailette 208, situé du côté des fenêtres, est également aminci afin de permettre un plaquage optimal de l'ailette 208 contre le côté de la bobine.

Alternativement, le système d'encliquetage pourra être formé par une encoche ménagée dans l'épaisseur du rebord avant 203. Le bord libre de l'ailette 208 forme alors une languette destinée à s'insérer à l'intérieur de l'encoche pour maintenir l'ailette 208 rabattue contre le corps 23 de l'isolant 20. A cet effet, la partie de l'ailette 208 formant la languette pourra présenter une épaisseur amincie afin de faciliter le positionnement de la languette à l'intérieure de l'encoche et de garantir un bon plaquage de l'ailette 208 contre un côté latéral de la bobine 19.

Selon l'invention, l'une au moins des bobines 19 est en contact avec un capteur 101 de température porté par un support 110 électriquement isolant visible sur les figures 8, 10a, 10b, 11a, 11b et 12. Le capteur 101 pourra notamment être surmoulé sur le support 110. En variante le capteur 101 pourra être fixé par collage ou tout autre moyen sur le support 110.

Ce capteur 101 est relié aux moyens de commande et de contrôle de la machine (non représenté) aptes à couper l'alimentation des bobines du stator 11 lorsqu'une surchauffe de la machine est détectée. L'étage de commande et de contrôle appartient à l'électronique de la machine électrique comportant également un étage de puissance doté d'un onduleur comme décrit par exemple dans le document EP 0 831 580 précité.

Le capteur est de préférence un capteur de type CTN (Coefficient de Température Négatif). Bien entendu en variante, on utilise un capteur de type CTP (Coefficient de Température Positif), cela dépend des applications. Ces capteurs CTN et CTP sont des thermistances dont la résistance varie en fonction de la tempréture.

Sur les figures 8, 10a, 10b, 11a, 11b et 12, est montré un support 110 pour capteur 101 de température du stator 11 d'une machine électrique tournante. Ce support 110 comprend :
- un corps 111 élastique comportant un capteur 101 de température à l'endroit d'une portion 112 faisant saillie suivant un axe vertical A, ledit corps 111 comprenant, suivant ledit axe vertical A, une première position dans laquelle le corps 111 est détendu et une seconde position dans laquelle le corps 111 est compressé,
- au moins un élément de fixation 113 présentant une paroi de contact 114,

La paroi 114 est adaptée à être maintenue fixement et en contact sur l'interconnecteur 22. Suivant l'axe vertical A, dans ladite seconde position, le capteur 101 est à plus grande proximité de ladite paroi 114 que dans ladite première position. La paroi de contact 114 étant en contact intime avec l'interconnecteur 22, suivant l'axe vertical A, dans la seconde position, le capteur 101 est à plus grande proximité de l'interconnecteur 22 que dans la première position.

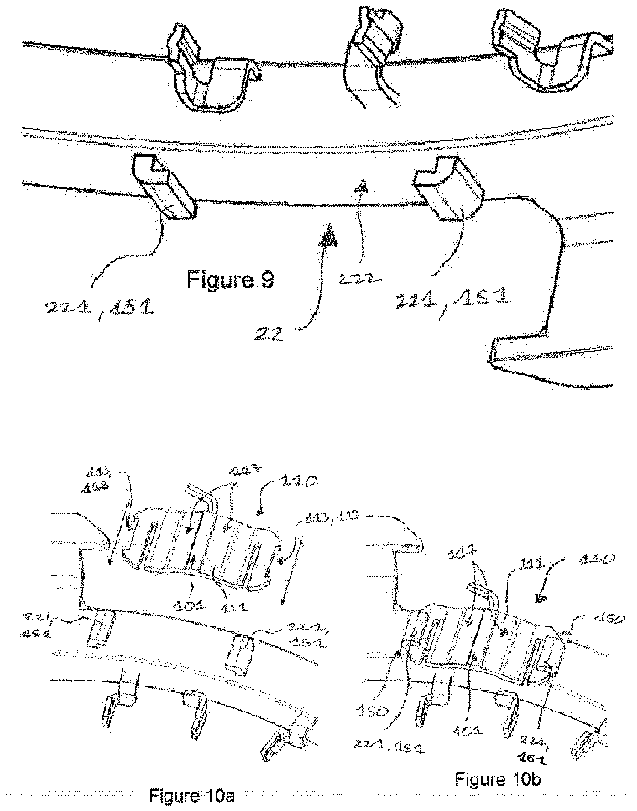

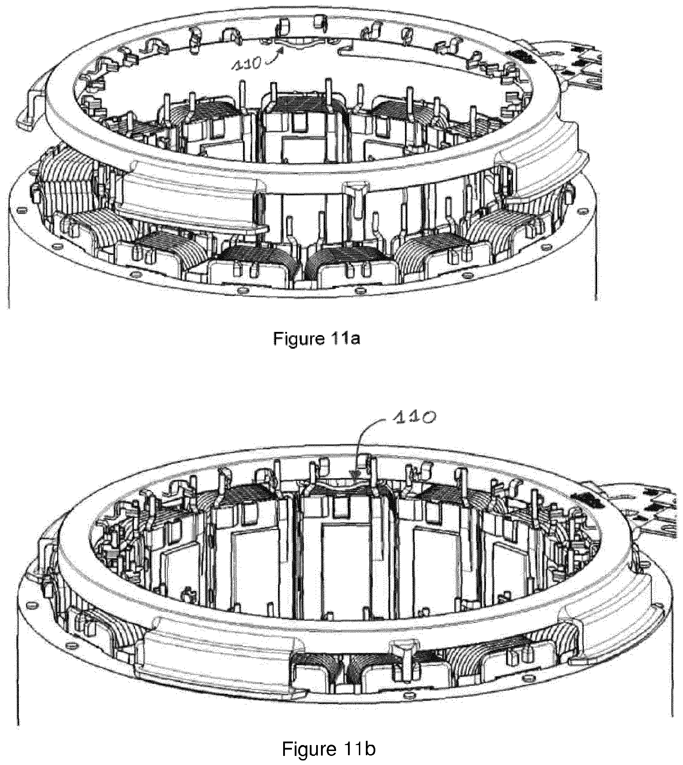

Comme mieux visible dans les figures 10a, 10b, 11a, 11b, le support 110 est destiné à être fixé de manière directe sur le l'interconnecteur 22 via au moins un élément de maintien 221 électriquement isolant. Plus précisément, l'au moins un élément de maintien 221 est porté par l'interconnecteur 22.

Dans un mode de réalisation, l'élément de maintien 221 est porté par le corps 38 de l'interconnecteur 22. La liaison du capteur 101 de température à l'étage de commande est effectuée par les fils de connexion.

Selon un mode préféré de réalisation, le support 110 comporte une portion centrale 115 portant le capteur de température 101 et deux portions terminales 116. Le capteur est situé sur la portion centrale 115 du corps 111 définissant la portion 112 faisant saillie et l'au moins un élément de fixation 113 est porté par une portion terminale 116 du corps 111 située à distance de ladite portion centrale 115.

Une fois le support 110 monté sur l'interconnecteur 22 et les pieds 61 de l'interconnecteur 22 en contact de la culasse 17, la portion centrale 115 du support 110 comprenant le capteur 101 du côté d'une face inférieure 117 (du corps 38) venant directement en regard des enroulements de la bobine 19, maintient ainsi le capteur 101 en contact contre la bobine 19 et évite les mouvements du capteur 101.

Sur la figure 8, est montré un autre mode de réalisation dans lequel les portions terminales présentent des évidements latéraux 119 à l'endroit de leurs bords transversaux 120. Ces bords transversaux 120 s'étendent classiquement suivant la largeur du support 110.

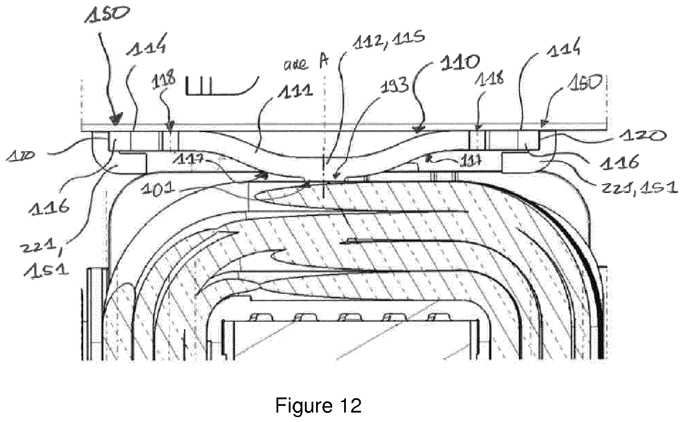

Selon un autre mode préféré de réalisation, le capteur 101 est situé sur une face inférieure 117 du corps 111 élastique ; cette face 117 est orientée dans une orientation opposée à celle de la paroi de contact 114 (voir figures 8 et 12).

Dans un mode de réalisation, les deux portions terminales 112 coopèrent avec l'au moins un élément de maintien 221 porté par l'interconnecteur 22, préférentiellement à l'endroit du cadre inférieur.

Dans un autre mode de réalisation, une partie des fils électriques reliant le capteur 101 à l'étage de puissance et de contrôle de la machine pourront être noyés dans la portion centrale 115 du support. Cette partie des fils est ainsi protégée des agressions extérieures.

Le corps 111 élastique a deux fonctions : une première fonction pour porter le capteur 101 et une seconde fonction pour rattraper un jeu entre le capteur et la bobine. Ces deux fonctions sont permises grâce à la capacité de déformation élastique de ce corps 38.

Dans une variante représentée sur les figures 8, 10a et 10b, pour obtenir l'effet élastique, des fentes transversales 118 sont réalisées transversalement, c'est-à-dire suivant la largeur du support 110, afin de faciliter la compression et la détente du support 110 sans le dégrader. Ces fentes 118 seront préféntiellement agencées à plus grande proximité des portions terminales 116 que de la portion centrale 115.

Les figures 11a et 11b illustrent le stator 11 comprenant :
- l'interconnecteur 22 pour interconnecter des bobines 19;
- un bobinage enroulé autour d'un corps 201 ;
- un support 110 comprenant un corps 111 élastique qui comporte un capteur 101 de température orienté vers le bobinage, ledit corps 111 élastique comprenant, suivant l'axe vertical A, une seconde position dans laquelle le corps 111 est compressé et le capteur 101 en contact avec le bobinage,

Le support 110 est porté par l'interconnecteur 22. On entend par « porté par l'interconnecteur » que seul l'interconnecteur 22 maintient le support. On ne considère pas que le capteur 101 - en contact avec le bobinage - est porté par le bobinage. La fonction du contact du capteur 101 avec le bobinage est de mesurer la température.

Le support 110 porté par l'interconnecteur 22 peut par exemple avoir la forme du support 110 susdécrit. Bien entendu, les exemples de réalisation du support 110 ne sont sont pas limitatifs ; on peut donc imaginer tout type de support 110 pour capteur de température adapté à être porté par l'interconnecteur 22.

Comme montré sur la figure 12, le capteur 101 est préférentiellement en contact avec une partie supérieure 193 du bobinage. Sur cette même figure 12, est également montré un mode préférentiel de réalisation dans lequel le support 110 est maintenu sur l'interconnecteur 22 à l'endroit d'une face inférieure 222 de l'interconnecteur 22.

Concernant maintenant le mode de montage du support 110 sur l'interconnecteur 22, le support 110 est maintenu sur l'interconnecteur 22 au moyen d'un système d'encliquetage 150. Pour illustrer le montage du support 110 sur l'interconnecteur, on se réfèrera aux figures 10a et 10b montrant respectivement le support 110 sur le point d'être monté sur l'interconnecteur 22 et le support 110 monté sur l'interconnecteur.

A l'intersection entre les bords transversaux 120 et des bords longitudinaux 121, les portions terminales 116 présentent une forme propre à faciliter l'insertion du support 110 dans les éléments de maintien 221 de l'interconnecteur 22. Cette forme peut avoir une forme arrondie et convexe de façon à faciliter le glissement du support 110 par rapport aux éléments de maintien 22. Cette forme peut également consister en une partie taillée obliquement dans le sens de l'épaisseur du support 110.

Par exemple dans un mode de réalisation, le système d'encliquetage 150 est constitué de :
- deux éléments de maintien 221 définissant des pattes 151 et portés par l'interconnecteur 22,
- deux évidements 119 portés par le support 110 et adaptés à coopérer avec les deux éléments de maintien 221 (définissant dans un mode de réalisation des pattes 151).

Les pattes 151 et les évidements 119, combinés à à l'agencement de formes propres à faciliter l'insertion, permettent donc de faire glisser le support 110 entre les pattes 151 de l'interconnecteur 22 jusqu'à ce que les pattes 151 s'encliquettent dans les évidements 119.

Les évidements 119 latéraux sont destinés à coopérer avec les éléments de maintien 221. Le support présente une longueur suffisante de sorte que les évidements 119 soient suffisamment espacés et rendent alors possible la déformation du support 110 lors du montage de ce dernier sur l'interconnecteur 22. Ce système d'encliquetage 150 nécessite en effet que la distance entre les évidements 119 varie pour que le support 110 soit maintenu grâce à la compression et à la détente suivant la direction longitudinale. Lors de l'insertion, les portions terminales 116 se rapprochent élastiquement pour reprendre leur configuration initiale après que les évidements 119 latéraux soient mis directement en regard des éléments de maintien 221. Le support 110 est alors maintenu axialement et radialement par l'au moins un élément de maintien 221. Dans une variante non représentée, on peut également envisager que, lors de l'insertion, les portions terminales 116 s'écartent élastiquement pour reprendre leur configuration initiale lorsqu'un élément du type languette équipant les bords transversaux 120 des portions terminales 116 soient mis directement en regard des éléments de maintien 221 qui pourrait être formés par des pattes comprennant des encoches.

Dans tous les cas, la déformation du support 110 lors de son insertion dans l'interconnecteur 22 permet, une fois l'interconnecteur 22 positionné, de garantir un bon plaquage du capteur contre la partie supérieure 193 du bobinage 19.

Une fois le support 110 monté a priori sur le cadre inférieur 34, il est alors maintenu par les éléments de maintien 221 formant avec les évidements 119, des connexions du type mâle-femelle. Les dimensions des évidements 119 et des éléments de maintien 221 sont donc conformés pour que l'élément de maintien 221 soit ajusté dans l'évidement.

Les éléments de maintien 221 est dans un mode de réalisation venu de moulage avec le corps de l'interconnecteur. Ce corps est de préférence en matière plastique moulable.

La hauteur de l'ensemble formé par le support 110 équipé du capteur 101 est conformé de sorte qu'il s'ajuste à la hauteur définie entre la face inférieure 222 de l'interconnecteur (ou du cadre inférieur 34) et une partie supérieure 193 du bobinage 19, le capteur 101 étant destiné à être en contact avec la partie supérieure 193 du bobinage 19. L'ajustement de la hauteur se fait au moyen du caractère élastique du support 110. Une telle intégration du support 110 permet ainsi d'intégrer le capteur 101 de température tout en préservant l'encombrement radial et l'encombrement en hauteur du stator 11.

Le support 110 est en matière électriquement isolante telle que de la matière plastique moulable, de préférence rigide. Le support 110 pourra être en PA 6.6.

On décrit ci-après une opération permettant d'obtenir le stator 11 bobiné selon l'invention connecté à l'interconnecteur 22.

Dans un premier temps, les isolants 20 de bobine sont positionnés autour d'un outil externe. Le fil est ensuite enroulé autour de l'isolant 20 de bobine à l'intérieur de la gorge. Chaque isolant 20 de bobine est ensuite retiré de l'outil puis enfilé autour d'une dent 14 du stator 11. Le talon 207 de chaque dent 14 est alors positionné de manière à être plaqué contre le fond d'une encoche 15 pour isoler efficacement les bobines 19 de la culasse 17. L'ailette 208 est rabattue vers la bobine 19 de manière à être maintenue repliée par un rebord avant d'un isolant 20 adjacent. L'ailette 208 constitue ainsi un mur électriquement isolant entre deux bobines 19 adjacentes.

Le procédé de montage du capteur 101 de température dans le stator 11 comporte les étapes suivantes :
a) le support 110 portant le capteur 101 est monté sur l'interconnecteur 22,
b) l'interconnecteur 22 est fixé sur le stator 11 et positionné au-dessus du bobinage enroulé autour du corps 201 et porté par le stator 11, le capteur 101 étant concomittament mis en contact du bobinage.

L'interconnecteur 22 externe peut alors être positionné au-dessus des bobines 19 pour assurer une connexion des bobines 19 aux différents cadres 31-34 des phases U, V, W de la machine. L'interconnecteur 22 est positionné de sorte que :
- les pieds 61 reposent sur un rebord de la culasse 17 via le support 62,
- les pions 53 d'indexage s'insèrent entre les protubérances 54 correspondantes des isolants 20 de bobine,
- le capteur 101 équipant le support soit en contact (continûment dans le temps) avec le bobinage 19.

L'interconnecteur 22 est ensuite fixé sur le stator 11 par soudage des pattes 36 du cadre de neutre 31 et des cadres de phase 32-34 avec les extrémités 191, 192 des bobines. A cet effet, les entrées 191 des bobines 19 sont soudées alternativement aux pattes 36 des cadres de phase 32-34 correspondant aux phases U, V et W; tandis que les sorties 192 des bobines 19 sont soudées aux pattes 36 appartenant au cadre de neutre 31.

Dans un mode de réalisation, on effectue ensuite une opération d'imprégnation du bobinage du stator 11 par un vernis d'imprégnation. A cette fin, le stator 11 est chauffé ainsi que le vernis pour être introduit à l'état liquide goutte à goutte dans les rainures borgne 211. Le vernis est par exemple à base de résine époxy, de résine polyester non saturée ou de résine silicone. Bien entendu, de manière connue, on peut ajouter aux résines des accélérateurs pour diminuer la durée de l'imprégnation. On notera que les rainures borgnes 211 des parois inférieure et supérieure sont éloignées les unes des autres en fonction de l'épaisseur de la culasse 17. Ces rainures 43, ne sont pas masquées par la culasse 17.

Alternativement, l'opération d'imprégnation pourra être effectuée par passage successif, suivant un déplacement en rotation du stator 11, des bobines 19 à l'intérieur d'un bain contenant du vernis chaud. Ainsi en variante l'opération d'imprégnation pourra être réalisée par trempage partiel et roulage du stator dans un bain de vernis d'imprégnation. En variante l'opération d'imprégnation pourra être réalisée sous vide ou par trempage simple complet du stator dans un bain de vernis d'imprégnation. Dans tous les cas le vernis est refroidi en se polymérisant.

On note que le positionnement de l'interconnecteur 22 au-dessus des bobines 19 ainsi que ses dimensions réduites, en particulier celle du diamètre extérieur qui est inférieur à celui du stator 11, facilite le passage du vernis d'imprégnation de l'extérieur vers l'intérieur des bobines 19 via les rainures 211 borgnes.

Suivant un mode préféré de réalisation, l'imprégnation du bobinage du stator 11 a lieu après le positionnement de l'interconnecteur 22 au-dessus des bobines 19, c'est-à-dire une fois que le capteur 101 est en contact (continûment dans le temps) avec la partie supérieure 193 du bobinage. Cette succession permet notamment que le capteur 101 de température soit en contact direct avec la partie supérieure 193 du bobinage et non pas avec le vernis recouvrant le bobinage. On comprend donc que le capteur de température 101 est vernis avec le bobinage du stator 11 ce qui assure une meilleure conductivité thermique. L'opération d'imprégnation a lieu préférentiellement après avoir soudé l'interconnecteur 22 aux extrémités 191,192 des bobines 19 du stator.

On appréciera que le capteur 101 de température permet de commander l'interruption du circuit électrique de bobines en cas de température excessives. Ce capteur 101, via le support 110 présentant des propriétés élastiques, est positionné de manière adjacente à la bobine 19 concernée. Ce positionnement optimal est maintenu lors de la durée de vie de la machine. Le coincement du support 110 via la coopération avec les éléments de maintien 221 de l'interconnecteur 22 et la fixation de l'interconnecteur 22 à la culasse 17 prévient tout mouvement du capteur 101 et s'intègre parfaitement dans ce volume laissé vide compris entre la partie supérieure 193 du bobinage et la face inférieure 222 de l'interconnecteur 22 ; l'intégration de ce capteur 101 ne se fait donc pas au détriment d'un volume nécessitant des pièces complexes ou un encombrement supérieur. Par ailleurs, le procédé de montage d'un tel capteur 101 s'en trouve facilité et on peut avantageusement vernir le capteur 101 alors en contact de la partie supérieure 193 du bobinage sans recourir à des outils ou moyens de mise en oeuvre complexes.

Le rotor de la machine électrique pourra être un rotor à griffes comme dans le document FR 2 890 798. En variante le rotor pourra être à pôles saillants. En variante le rotor pourra être un rotor à aimants permanents comme dans les documents EP 0 803 962 et EP 0 831 580 précités. En variante le rotor à griffes ou à pôles saillants pourra comporter également des aimants permanents. En variante les dents 14 pourront ne pas être réparties circonférentiellement de manière régulière.

L'homme du métier pourra bien entendu modifier la configuration de l'interconnecteur 22 précédemment décrit sans sortir du cadre de l'invention. Ainsi notamment, le stator 11 pourra présenter en variante un bobinage quadriphasé, pentaphasé, voire même hexaphasé. Dans ce cas, l'interconnecteur 22 comporte respectivement 45, 6, 7 cadres empilés les uns sur les autres, le cadre externe constituant le point neutre ; l'interconnecteur peut également ne pas comprendre de point neutre..

La machine électrique tournante pourra appartenir à un véhicule automobile et être de manière précitée un alternateur, un alterno-démarreur qui est un alternateur réversible, un moteur électrique ou un ralentisseur électromagnétique, tel celui décrit à la figure 15 du document FR 2 918 512.

Dans le cadre d'un alternateur appartenant à un prolongateur d'autonomie d'un véhicule électrique (Range-extender en Anglais) le rotor pourra être un rotor à aimants permanents avec plusieurs aimants par logement soumis à l'action d'un ressort comme décrit dans la demande FR 12/54733 déposée le 24/05/2012. On appréciera que ce type de machine est réversible, compacte axialement tout en étant d'une grande puissance.

Bien entendu l'isolant 20, qui est ici rigide, pourra être en variante dépourvu d'ailette et/ou de talon. Le nombre de bobines 19 dépend des applications et peut donc être inférieur ou supérieur à 15.

## Revendications

1. Stator (11) d'une machine électrique tournante comprenant :
• un interconnecteur (22) comportant des cadres de forme annulaire s'étendant suivant un plan radial pour interconnecter des bobines (19) pour former les différentes phases U, V, W;
• un bobinage enroulé autour d'un corps de stator (201) ;
• un support (110) comprenant un corps élastique (111) qui comporte un capteur (101) de température orienté vers le bobinage, ledit corps (111) élastique étant configuré pour avoir suivant un axe vertical A une première position dans laquelle le corps (111) est détendu et une seconde position dans laquelle le corps (111) est compressé, le support (110) comprenant au moins un élément de fixation (113) présentant une paroi de contact (114) qui est adaptée à être maintenue fixement et en contact sur l'interconnecteur (22),
**caractérisé en ce que** le support (110) est porté par l'interconnecteur (22) et **en ce que** suivant l'axe vertical A, dans ladite seconde position, le capteur (101) est à plus grande proximité de ladite paroi (114) que dans ladite première position.

2. Stator selon la revendication 1, caractérisé en ce le corps élastique (111) comporte ledit capteur (101) de température à l'endroit d'une portion (112) faisant saillie suivant un axe vertical A.

3. Stator selon la revendication 2, dans lequel le capteur (101) est situé sur une portion centrale (115) du corps (111) définissant la portion (112) faisant saillie et l'au moins un élément de fixation (113) est porté par une portion terminale (116) du corps (111) située à distance de ladite portion centrale (115).

4. Stator selon l'une des revendications précédentes, dans lequel le capteur (101) est situé sur une face inférieure (117) du corps (111) élastique, ladite face (117) étant orientée dans une orientation opposée à celle de la paroi de contact (114).

5. Stator selon l'une des revendications précédentes, dans lequel le corps (111) présente des fentes transversales (118), préférentiellement à plus grande proximité des portions terminales (116) que de la portion centrale (115).

6. Stator selon l'une des revendications précédentes, dans lequel les portions terminales (116) présentent des évidements (119) latéraux à l'endroit de leurs bords transversaux (120).

7. Stator (11) selon l'une des revendications précédentes, dans lequel le capteur (101) est en contact avec une partie supérieure (193) du bobinage lorsque le corps (111) est suivant ladite seconde position dans laquelle le corps (111) est compressé.

8. Stator (11) selon l'une des revendications précédentes, dans lequel le support (110) est maintenu sur l'interconnecteur (22) à l'endroit d'une face inférieure (222) dudit interconnecteur (22).

9. Stator (11) selon la revendication 8, dans lequel le support (110) est maintenu sur l'interconnecteur (22) au moyen d'un système d'encliquetage (150).

10. Stator (11) selon la revendication 9, dans lequel le système d'encliquetage (150) est constitué de :
• deux éléments de maintien (221) définissant des pattes (151) et portés par l'interconnecteur (22) ;
• deux évidements (119) portés par le support (110) et adaptés à coopérer avec les deux éléments de maintien (221).

11. Procédé de montage d'un capteur (101) de température dans un stator (11) d'une machine électrique tournante tel que défini dans l'une des revendications 1 à 10, ledit procédé comportant les étapes successives suivantes :
a) un support (110) portant un capteur (101) de température est monté sur un interconnecteur (22),
b) l'interconnecteur (22) est fixé sur un stator (11) et positionné au-dessus d'un bobinage enroulé autour d'un corps (2) et porté par le stator (11), le capteur (101) étant concomitamment mis en contact du bobinage
c) le capteur (101) est mis en contact avec une partie supérieure (193) du bobinage.

12. Procédé de montage selon la revendication 11 comprenant en outre une étape c) d'imprégnation alors que le capteur (101) est en contact avec le bobinage.

## Patentansprüche

1. Stator (11) einer drehenden elektrischen Maschine, umfassend:
• einen ringförmige Rahmen, die sich einer radialen Ebene folgend erstrecken, beinhaltenden Verbinder (22), um Spulen (19) miteinander zu verbinden, um die unterschiedlichen Phasen U, V, W zu bilden;
• eine Wicklung, die rund um einen Statorkörper (201) aufgewickelt ist;
• einen Träger (110), der einen elastischen Körper (111) umfasst, der einen Temperaturgeber (101) beinhaltet, der in Richtung der Wicklung ausgerichtet ist, wobei der elastische Körper (111) dazu ausgelegt ist, einer vertikalen Achse A folgend eine erste Position, in der der Körper (111) entspannt ist, und eine zweite Position, in der der Körper (111) zusammengedrückt ist, zu haben, wobei der Träger (110) mindestens ein Befestigungselement (113) umfasst, das eine Kontaktwand (114) aufweist, die dazu ausgeführt ist, fest und in Kontakt mit dem Verbinder (22) gehalten zu werden,
**dadurch gekennzeichnet, dass** der Träger (110) vom Verbinder (22) getragen ist und dass der Temperaturgeber (101) der vertikalen Achse A folgend in der zweiten Position der Wand (114) näher als in der ersten Position ist.

2. Stator nach Anspruch 1, **dadurch gekennzeichnet, dass** der elastische Körper (111) den Temperaturgeber (101) an der Stelle eines Abschnitts (112), der einer vertikalen Achse A folgend hervorragt, beinhaltet.

3. Stator nach Anspruch 2, wobei der Temperaturgeber (101) sich auf einem zentralen Abschnitt (115) des Körpers (111) befindet, der den hervorragenden Abschnitt (112) definiert, und wobei das mindestens eine Befestigungselement (113) von einem Endabschnitt (116) des Körpers (111) getragen ist, der sich entfernt vom zentralen Abschnitt (115) befindet.

4. Stator nach einem der vorhergehenden Ansprüche, wobei der Temperaturgeber (101) sich auf einer unteren Fläche (117) des elastischen Körpers (111) befindet, wobei die Fläche (117) in einer Ausrichtung ausgerichtet ist, die der der Kontaktwand (114) entgegengesetzt ist.

5. Stator nach einem der vorhergehenden Ansprüche, wobei der Körper (111) Querschlitze (118) aufweist, vorzugsweise näher an den Endabschnitten (116) als am zentralen Abschnitt (115).

6. Stator nach einem der vorhergehenden Ansprüche, wobei die Endabschnitte (116) an der Stelle ihrer Querränder (120) seitliche Aussparungen (119) aufweisen.

7. Stator (11) nach einem der vorhergehenden Ansprüche, wobei der Temperaturgeber (101) in Berührung mit einem oberen Teil (193) der Wicklung ist, wenn der Körper (111) in der zweiten Position, in der der Körper (111) zusammengedrückt ist, ist.

8. Stator (11) nach einem der vorhergehenden Ansprüche, wobei der Träger (110) an der Stelle einer unteren Fläche (222) des Verbinders (22) am Verbinder (22) gehalten wird.

9. Stator (11) nach Anspruch 8, wobei der Träger (110) mittels eines Rastsystems (150) am Verbinder (22) gehalten wird.

10. Stator (11) nach Anspruch 9, wobei das Rastsystem (150) besteht aus:
• zwei Halteelementen (221), die Klauen (151) definieren und vom Verbinder (22) getragen sind;
• zwei Aussparungen (119), die vom Träger (110) getragen sind und dazu ausgeführt sind, mit den zwei Halteelementen (221) zusammenzuwirken.

11. Montageverfahren eines Temperaturgebers (101) in einem Stator (11) einer drehenden elektrischen Maschine wie in einem der Ansprüche 1 bis 10 definiert, wobei das Verfahren die folgenden aufeinanderfolgenden Schritte beinhaltet:
a) ein Träger (110), der einen Temperaturgeber (101) trägt, wird an einem Verbinder (22) montiert,
b) der Verbinder (22) wird an einem Stator (11) befestigt und oberhalb einer um einen Körper (2) gewickelten und vom Stator (11) getragenen Wicklung positioniert, wobei der Temperaturgeber (101) dabei in Berührung mit der Wicklung gebracht wird,
c) der Temperaturgeber (101) wird in Berührung mit einem oberen Teil (193) der Wicklung gebracht.

12. Montageverfahren nach Anspruch 11, umfassend unter anderem einen Schritt c) der Imprägnierung, während der Temperaturgeber (101) mit der Wicklung in Berührung ist.

## Claims

1. Stator (11) for a rotary electric machine comprising:
• an interconnector (22) comprising annular shaped frames extending along a radial plane in order to interconnect coils (19) for forming the various phases U, V, W;
• a coil wound around a stator body (201);
• a support (110) comprising a resilient body (111) that comprises a temperature sensor (101) oriented towards the coil, said resilient body (111) being configured to have, along a vertical axis A, a first position, in which the body (111) is decompressed, and a second position, in which the body (111) is compressed, the support (110) comprising at least one attachment element (113) having a contact wall (114) that is adapted to be fixedly held on and in contact with the interconnector (22),
**characterized in that** the support (110) is borne by the interconnector (22) and **in that** along the vertical axis A, in said second position, the sensor (101) is closer to said wall (114) than in said first position.

2. Stator according to Claim 1, **characterized in that** the resilient body (111) comprises said temperature sensor (101) located at a portion (112) projecting along a vertical axis A.

3. Stator according to Claim 2, wherein the sensor (101) is located on a central portion (115) of the body (111) defining the projecting portion (112) and the at least one attachment element (113) is borne by an end portion (116) of the body (111) located at a distance from said central portion (115).

4. Stator according to any of the preceding claims, wherein the sensor (101) is located on a lower face (117) of the resilient body (111), said face (117) being oriented in an orientation opposite that of the contact wall (114).

5. Stator according to any of the preceding claims, wherein the body (111) has transverse slots (118), preferably closer to the end portions (116) than to the central portion (115).

6. Stator according to any of the preceding claims, wherein the end portions (116) have lateral recesses (119) located at the transverse edges (120) thereof.

7. Stator (11) according to any of the preceding claims, wherein the sensor (101) is in contact with an upper part (193) of the coil when the body (111) is in said second position, in which the body (111) is compressed.

8. Stator (11) according to any of the preceding claims, wherein the support (110) is retained on the interconnector (22) where a lower face (222) of said interconnector (22) is located.

9. Stator (11) according to Claim 8, wherein the support (110) is retained on the interconnector (22) by means of a catch system (150).

10. Stator (11) according to Claim 9, wherein the catch system (150) is formed by:
• two retention elements (221) defining lugs (151) and being borne by the interconnector (22);
• two recesses (119) borne by the support (110) and adapted to engage with the two retention elements (221) .

11. Method for assembling a temperature sensor (101) in a stator (11) of a rotary electric machine as defined in any of claims 1 to 10, said method comprising the following successive steps:
a) mounting a support (110) bearing a temperature sensor (101) onto an interconnector (22);
b) attaching the interconnector (22) on a stator (11) and positioning said interconnector (22) above a coil wound around a body (2) and borne by the stator (11), the sensor (101) being concomitantly brought into contact with the coil;
c) bringing the sensor (101) into contact with an upper part (193) of the coil.

12. Assembly method according to Claim 11, further comprising a step c) of impregnating while the sensor (101) is in contact with the coil.
